# EUROPÄISCHE PATENTSCHRIFT

(11) **EP 3 167 205 B1**
(45) Veröffentlichungstag und Bekanntmachung des Hinweises auf die Patenterteilung: **21.03.2018**
(21) Anmeldenummer: 15759362.5
(22) Anmeldetag: 08.07.2015
(51) Int. Cl.: F16G 15/04

(54) **BLOCKSCHLOSS MIT VERDREHVERSCHLUSS**
BLOCK LOCK WITH A TWIST LOCK
BLOC SERRURE AVEC SYSTÈME DE VERROUILLAGE

(30) Priorität: 11.07.2014 DE 202014103197 U
(43) Veröffentlichungstag der Anmeldung: 17.05.2017
(73) Patentinhaber: Thiele GmbH & Co. KG, 58640 Iserlohn (DE)
(72) Erfinder: BRODZIAK, Eugeniusz, 58640 Iserlohn (DE)
(74) Vertreter: Griepenstroh, Jörg
(86) Internationale Anmeldenummer: PCT/DE2015/100285
(87) Internationale Veröffentlichungsnummer: WO 2016/004923

(56) Entgegenhaltungen:
- DE-C1- 19 743 025
- FR-A- 597 566
- US-A- 1 672 867
- US-A- 1 979 069
- US-A- 4 179 878

## Beschreibung

Die vorliegende Erfindung betrifft ein Blockschloss zur Verbindung zweier Kettenenden gemäß den Merkmalen im Oberbegriff von Anspruch 1.

Aus dem Stand der Technik ist bekannt, die Kettenenden, insbesondere von Rundstahl- oder Flachgliederketten, über ein Kettenschloss miteinander zu verbinden, um somit einen Kettenstrang für einen jeweiligen Anwendungsfall bereitzustellen. Ein solches Kettenschloss wird auch als Blockschloss bezeichnet oder aber Kettenblockschloss zur Verbindung von Gliederketten, welche insbesondere als Rundstahl- oder Flachgliederketten ausgebildet sind. Nachfolgend wird ein solches Schloss zur Verbindung zweier Gliederketten als Blockschloss bezeichnet.

Ein derartiges Blockschloss ist beispielsweise aus der DE 197 43 025 C1 bekannt. Demnach werden zwei Blockschlosshälften, welche sich maßgeblich in Längsrichtung als länglicher Körper erstrecken, wobei die Längsrichtung des Körpers sich in Längsrichtung der Kette erstreckt, ineinander gesteckt, so dass diese unter Ausbildung zweier Aufnahmeöffnungen für ein jeweiliges endseitiges Kettenglied verriegeln.

Hierzu werden die jeweiligen endseitigen Kettenglieder in eine Schlosshälfte eingesetzt und durch Ineinandersetzen der beiden Schlosshälften wird das Blockschloss verriegelt.

Aufgabe der vorliegenden Erfindung ist es, ausgehend vom Stand der Technik ein Blockschloss aufzuzeigen, das gegenüber aus dem Stand der Technik bekannten Blockschlössern eine höhere Belastungsfähigkeit aufweist sowie optional leichter handhabbar ist.

Die zuvor genannte Aufgabe wird erfindungsgemäß mit einem Blockschloss zur Verbindung zweier Kettenenden gemäß den Merkmalen im Anspruch 1 gelöst. Vorteilhafte Ausgestaltungsvarianten der vorliegenden Erfindung sind Gegenstand der abhängigen Ansprüche.

Das Blockschloss zur Verbindung zweier Kettenenden, wobei das Blockschloss zwei gegenüberliegende sich in Längsrichtung erstreckende Blockschlosshälften aufweist, welche über Zapfen und Nuten formschlüssig ineinander greifen und unter Ausbildung zweier Aufnahmeöffnungen zur Aufnahme je eines Kettengliedes verriegeln, wobei die Aufnahmeöffnungen durch einen sich von einer Blockschlosshälfte zu der gegenüberliegenden Blockschlosshälfte erstreckenden Mittelsteg voneinander getrennt sind, ist erfindungsgemäß dadurch gekennzeichnet, dass die Blockschlosshälften drehbar über den Mittelsteg gekoppelt sind und an den Enden einer Blockschlosshälfte jeweils ein in Richtung der gegenüberliegenden Blockschlosshälfte überstehender Zapfen ausgebildet ist, der bei Ausführen einer relativen Drehbewegung beider Blockschlosshälften zueinander seitlich in einer an dem jeweiligen Ende der gegenüberliegenden Blockschlosshälfte ausgebildete Seitenaufnahmenut eingreift, wobei die je eine Seitenaufnahmenut eine in einer Seitenfläche liegende Öffnung zum Einschwenken des Zapfens aufweist und die Öffnungen an gegenüberliegenden Seitenflächen der Blockschlosshälfte ausgebildet sind. Das erfindungsgemäße Blockschloss zeichnet sich somit insbesondere dadurch aus, dass die zwei Blockschlosshälften eine relative Drehbewegung zueinander ausführen, wobei diese relative Drehbewegung insbesondere um eine Orthogonale zur Längsachse des Blockschlosses ausgeführt wird. Somit ergeben die beiden Blockschlosshälften im nicht verriegelten Zustand in Draufsicht eine X-förmige Ansicht, wobei dann die entsprechenden Seitenaufnahmenuten und Zapfen durch Ausführen der relativen Drehbewegung um die Orthogonale formschlüssig zum Eingriff kommen. Die Orthogonale ist dabei insbesondere als hohe Achse ausgebildet, um die die beiden Blockschlosshälften relativ zueinander drehbar, insbesondere drehbar gelagert sind. Besonders bevorzugt befindet sich die Orthogonale im Wesentlichen bezogen auf die Längsrichtung und/oder Querrichtung mittig des Blockschlosses.

Ein weiterer besonderer Vorteil ist, dass die Zapfen durch die relative Drehbewegung jeweils in die Seite der gegenüberliegenden Blockschlosshälfte formschlüssig einfahren und hier verriegeln. Insbesondere wird hierdurch die Handhabung des Blockschlosses zum Verbinden der beiden Kettenenden vereinfacht und so gleichzeitig die Belastungsfähigkeit durch die erfindungsgemäße Verriegelung gesteigert. Besonders bevorzugt weisen dazu die Zapfen und die Seitenaufnahmenuten in Querrichtung zu dem Blockschloss einen jeweils gekrümmten Verlauf auf. Aufgrund des gekrümmten Verlaufs ist die Drehbewegung und dabei das seitliche Einfahren des Zapfens in die Seitenaufnahmenut möglich bei gleichzeitig vollständigem Ausschöpfen der zur Verfügung stehenden Anlagenflächen zwischen Zapfen und Seitenaufnahmenut.

Zur Ausführung der Drehbewegung sind die Blockschlosshälften bevorzugt an einer Mittellängsebene des Blockschlosses derart getrennt, dass im Bereich der Mittellängsebene die beiden Mittelstege der gegenüberliegenden Blockschlosshälften an Anlageflächen zur Anlage kommen und zwischen diesen ein Bolzen, nachfolgend auch Drehbolzen genannt, eingegliedert ist. Der Bolzen kann dabei als Steckbolzen ausgebildet sein und in eine jeweilige Aufnahmeöffnung des Mittelstegs gesteckt sein. Im Rahmen der Erfindung wäre es auch vorstellbar, dass der Bolzen beispielsweise mit einem Rastmittel, insbesondere einem Federring, in dem jeweiligen Mittelsteg eingesteckt ist, so dass er zunächst unverlierbar mit dem Mittelsteg verbunden ist. Auch ist es vorstellbar, beide Blockschlosshälften mittels einer Rastverbindung, beispielsweise durch einen Federsteg, über den Bolzen drehbar miteinander zu koppeln, so dass die beiden Blockschlosshälften zwar drehbar zueinander, jedoch unverlierbar gekoppelt sind. Hierdurch ergibt sich der Vorteil, dass nicht die beiden Blockschlosshälften nochmals separat voneinander mit einer jeweiligen Hand eines anwendenden Monteurs gehalten werden müssen. Im Rahmen der Erfindung ist es auch vorstellbar, dass der Bolzen fest und insbesondere einstückig und werkstoffeinheitlich an einer Blockschlosshälfte ausgebildet ist und eine entsprechende Aufnahmeöffnung an der gegenüberliegenden Blockschlosshälfte einsteckbar ist. Hierdurch würde wiederum der Vorteil erreicht, dass jeweils zwei Blockschlosshälften eindeutig einander zuordnenbar sind. Die erfindungsgemäße Ausführungsform sieht vor, dass beide Zapfen an einer Blockschlosshälfte ausgebildet sind und die beiden Seitenaufnahmenuten dann an der gegenüberliegenden Blockschlosshälfte ausgebildet sind. Die Seitenaufnahmenuten sind jedoch aufgrund der relativen Drehbewegung der beiden Blockschlosshälften zueinander an gegenüberliegenden Seitenflächen der Blockschlosshälfte mit den Seitenaufnahmenuten ausgebildet, so dass ein Zapfen durch eine Drehbewegung auf einer Seitenfläche in die Seitenaufnahmenut eingedreht wird und der andere Zapfen auf der gegenüberliegenden Seitenfläche in eine Seitenaufnahmenut eingedreht wird.

Die Seitenaufnahmenut ist insbesondere gegenüber dem Ende und insbesondere einer Anlagefläche zu der anderen Blockschlosshälfte vertieft angeordnet. Zur weiteren Steigerung eines formschlüssigen sicheren Eingriffes ist besonders bevorzugt der Zapfen zu seinem Zapfenende hin aufgeweitet. Die Seitenaufnahmenut weist zu dem aufgeweiteten Zapfenende korrespondierend eine Hinterschneidung auf, so dass hier insbesondere auch ein Auseinanderbewegen der Blockschlosshälften quer zur Kettenlängsrichtung, insbesondere zu einer Oberseite bzw. Unterseite des Blockschlosses, unterbunden wird. Dies erfolgt insbesondere aufgrund der Hinterschneidung, welche formschlüssig eine Anlage orthogonal zur Kettenlängsrichtung ausbildet.

Im Rahmen der Erfindung ist es auch vorstellbar, dass der Zapfen an seinem Zapfenende zwei Aufweitungen bzw. Verbreiterungen oder mehrere Aufweitungen und/oder Verbreiterungen aufweist. Diese zwei, drei oder mehreren Verbreiterungen des Zapfenendes finden sich dann entsprechend korrespondierend auch in den Seitenaufnahmenuten wieder. Im Rahmen der Erfindung ist es auch vorstellbar, dass der Zapfen optional zu der Verbreiterung oder aber auch ohne Verbreiterung im Querschnitt einen konturierten Verlauf aufweist. Diese Kontur kann beispielsweise als Wellenform oder aber auch als Sägezahnform ausgebildet sein. Die Innenmantelfläche der Seitenaufnahmenut ist dann hierzu korrespondierend mit einer Innenkontur ausgebildet, so dass ein formschlüssiges Ineinandergreifen von Außenmantelfläche des Zapfens und Innenmantelfläche der Seitenaufnahmenut hergestellt wird. Die mehrfachen Verbreiterungen und/oder die wellenförmige bzw. sägezahnförmige Kontur bieten insbesondere, wie auch die nur eine Verbreiterung des Zapfenendes, den Vorteil, dass die Belastung des Kettenschlosses in Vertikalrichtung optimiert ist, so dass ein Öffnen bzw. Auseinanderscheren der zwei ineinandergesetzten Blockschlosshälften in Vertikalrichtung aufgrund des formschlüssigen Eingriffs der Kontur, insbesondere belastungsoptimiert vermieden ist.

Damit das erfindungsgemäße Blockschloss im verriegelten Zustand gehalten wird, ist weiterhin besonders bevorzugt vorgesehen, zwei Sicherungsbolzen, insbesondere zwei Federstifte, einzusetzen. Die Sicherungsbolzen erstrecken sich dabei bevorzugt orthogonal zur Längsrichtung des Blockschlosses und werden insbesondere über eine Seitenfläche oder über eine Oberseite oder Unterseite eingesetzt, wobei der Sicherungsbolzen dazu in einer Sicherungsbolzenaufnahme in dem Blockschloss aufgenommen ist.

Die Sicherungsbolzenaufnahme ist besonders bevorzugt derart ausgebildet, dass sie jeweils etwa zur Hälfte von einer Blockschlosshälfte gebildet ist und zu einer zur anderen Hälfte von der anderen Blockschlosshälfte ausgebildet ist. Insbesondere wird der Sicherungsbolzen dazu in einer Sicherungsbolzenaufnahme eingesteckt, die zumindest teilweise in dem Zapfen sowie anderen Teilen der dazu korrespondierenden Seitenaufnahmenut ausgebildet ist.

Darüber hinaus wird bei dem erfindungsgemäßen Blockschloss ein versehentliches Öffnen dadurch vermieden, dass die jeweils aufzunehmenden Kettenglieder des jeweiligen Kettenendes mit ihren Schenkeln den Zapfen in der Seitenaufnahmenut halten. Es ist dem Zapfen somit aufgrund des Umfassens durch das Kettenglied nicht möglich, seitlich aus der Seitenaufnahmenut hinaus bewegt zu werden. Dies bedeutet jedoch nicht, dass die seitlichen Schenkel des jeweiligen Kettenglieds unmittelbar an dem Blockschloss anliegen. Es kann ein Spiel von bis zu mehreren Millimetern möglich sein. Es wird jedoch verhindert, dass der Zapfen vollends aus der Seitenaufnahmenut herausgedreht wird. Um das Blockschloss zu entriegeln oder aber auch zunächst zu verriegeln, werden dazu die Kettenglieder in den Aufnahmeöffnungen derart verschwenkt, dass sie jeweils nur über eine Blockschlosshälfte zeigen, so dass dann die Drehbewegung der Blockschlosshälften und damit verbunden das Einführen oder aber Herausführen des Zapfens in oder aus der Seitenaufnahmenut ermöglicht ist.

Besonders bevorzugt weisen sowohl die Zapfen als auch die Seitenaufnahmenuten in Querrichtung der jeweiligen Blockschlosshälfte einen gekrümmten Verlauf auf. Der Radius des gekrümmten Verlaufs entspricht dabei in etwa dem Abstand von Mittelpunkt von Zapfen bzw. Seitenaufnahmenut zur Drehachse bzw. Mittelpunkt des Drehbolzens. Hiermit wird bei Ausführen der Drehbewegung ein Eindrehen von dem Zapfen in die Seitenaufnahmenut ermöglicht und gleichzeitig die größtmöglich zur Verfügung stehende Kontaktfläche zwischen Außenmantelfläche des Zapfens und Innenmantelfläche der Seitenaufnahmenut zur Übertragung einer Zugkraft ausgenutzt, was die Belastungsfähigkeit des erfindungsgemäßen Blockschlosses erhöht.

Die Blockschlosshälften sind als Metallbauteil, insbesondere aus einer Stahllegierung hergestellt. Bevorzugt sind die Blockschlosshälften als Gussbauteil und/oder Schmiedebauteil hergestellt.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: das erfindungsgemäße Blockschloss in einer Längsschnittansicht mit jeweils zwei Enden einer Kette im Eingriff;
- Figur 2: das Blockschloss in einer perspektivischen Ansicht;
- Figur 3a) bis d): eine obere Blockschlosshälfte in verschiedenen Ansichten;
- Figur 4a) bis d): eine untere Blockschlosshälfte in verschiedenen Ansichten und
- Figur 5: eine Seitenansicht auf das erfindungsgemäße Blockschloss.

In den Figuren werden für gleiche oder ähnliche Bauteile dieselben Bezugszeichen verwendet, auch wenn eine wiederholte Beschreibung aus Vereinfachungsgründen entfällt.

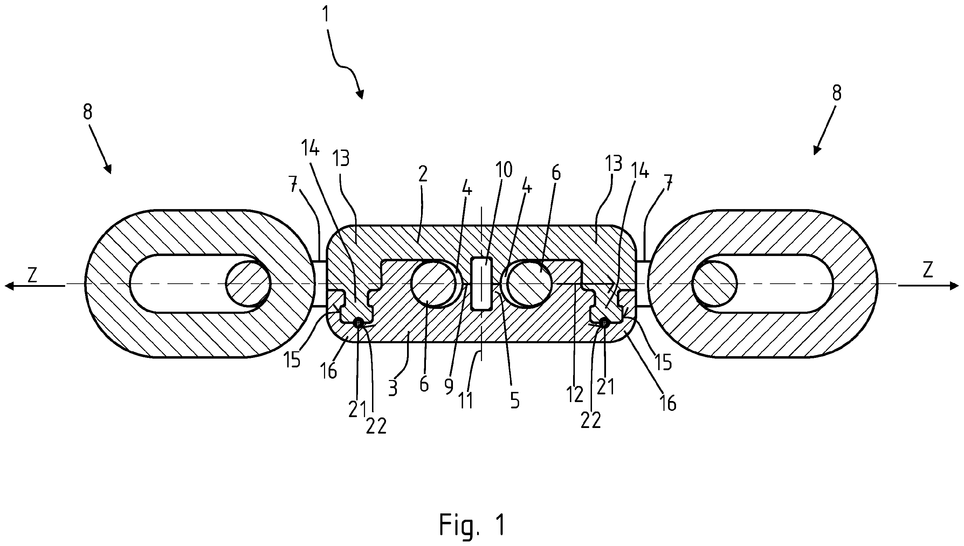

Figur 1 zeigt ein erfindungsgemäßes Blockschloss 1 in einer Längsschnittansicht. Das Blockschloss 1 weist dazu eine obere Blockschlosshälfte 2 sowie eine untere Blockschlosshälfte 3 auf, die formschlüssig ineinander greifen. Dabei bilden die zwei Blockschlosshälften 2, 3 innenliegend zwei Aufnahmeöffnungen 4 auf, die durch einen zweigeteilten Mittelsteg 5 miteinander gekoppelt sind. In einer jeweiligen Aufnahmeöffnung 4 ist ein Kettenglied 7 eines Endes einer jeweiligen Kette 8 mit seiner Rundung 6 aufgenommen, so dass diese in Zugrichtung Z der Kette 8 miteinander verbunden sind. Der geteilte Mittelsteg 5 wird dabei jeweils hälftig in dieser Ausführungsvariante von der oberen Blockschlosshälfte 2 und der unteren Blockschlosshälfte 3 ausgebildet, wobei diese im Mittelsteg 5 auf einer Mittellängsebene 9 geteilt sind und hier formschlüssig zur Anlage kommen. In dem Mittelsteg 5 selbst ist ein Drehbolzen 10 formschlüssig eingegliedert, wobei der Drehbolzen 10 eine Drehachse 11 definiert, die orthogonal zur Längsrichtung 12 des Blockschlosses 1 angeordnet ist. Um die Drehachse 11 sind die obere Blockschlosshälfte 2 und die untere Blockschlosshälfte 3 drehbar gelagert, so dass diese in einem verriegelbaren Eingriff bringbar sind oder aus dem verriegelbaren Eingriff lösbar sind. Damit im in der Figur 1 dargestellten verriegelten Eingriff die obere Blockschlosshälfte 2 und untere Blockschlosshälfte 3 formschlüssig ineinander greifen, sind an den Enden 13 der oberen Blockschlosshälfte 2 sich in Richtung zu der unteren Blockschlosshälfte 3 erstreckend Zapfen 14 ausgebildet. Die Zapfen 14 sind dabei formschlüssig in Seitenaufnahmenuten 15, welche sich in Enden 16 der unteren Blockschlosshälfte 3 befinden, aufgenommen.

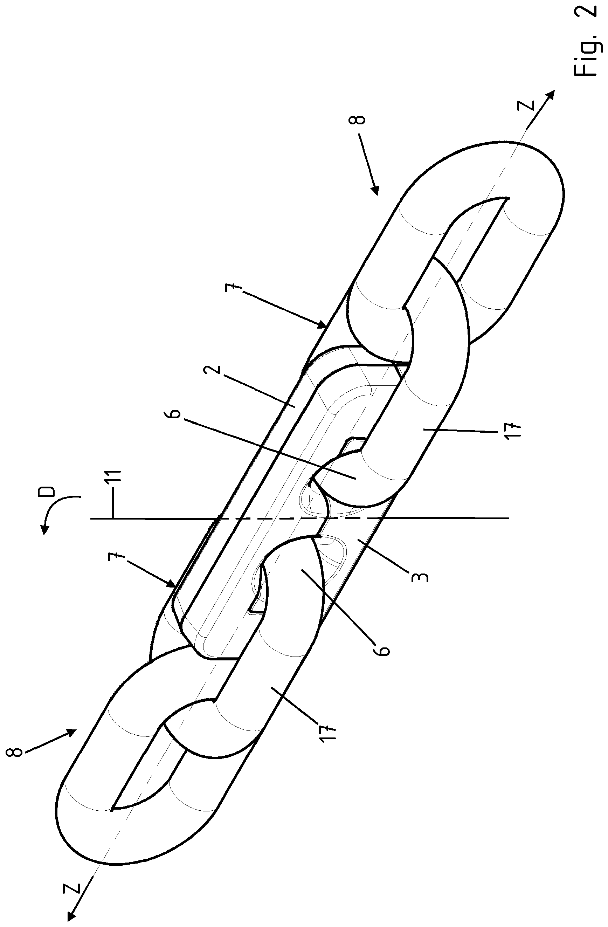

Figur 2 verdeutlicht noch einmal den verriegelten Eingriff, wobei die jeweils aufgenommenen Kettenglieder 7 mit ihren Schenkeln 17 die Zapfen 14 seitlich umfassen und somit eine Drehbewegung D um die Drehachse 11 im verriegelten Zustand und im Betrieb der mit dem Blockschloss 1 verbundenen Ketten 8 verhindern.

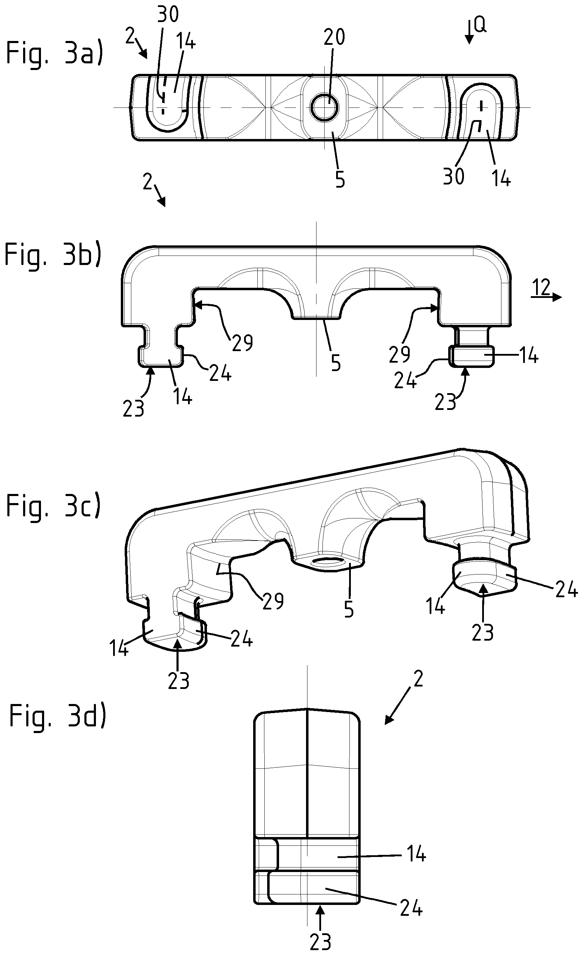

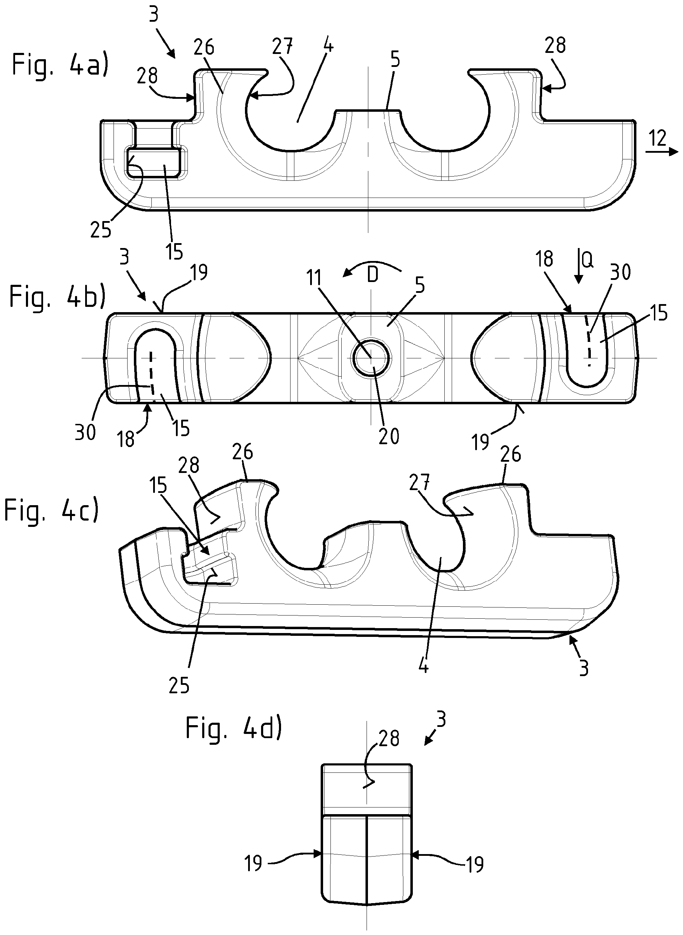

Das erfindungsgemäße Prinzip des drehbaren Eingriffes wird insbesondere noch einmal in den Figuren 3 und 4 verdeutlicht. Mit Verweis auf die Figur 4a) und b) ist an der dort dargestellten unteren Blockschlosshälfte 3 die jeweilige Seitenaufnahmenut 15 mit einer Öffnung 18 an gegenüberliegenden Seitenflächen 19 ausgebildet. Somit kann eine Drehbewegung D um die Drehachse 11 ausgeführt werden, so dass die in Figur 3a), 3b) und 3c) dargestellten Zapfen 14 der oberen Blockschlosshälfte 2 jeweils formschlüssig über die Öffnung 18 in die Seitenaufnahmenut 15 eingedreht werden. Damit die Drehbewegung D insbesondere kontrolliert und geführt vorgenommen werden kann, ist jeweils eine Aufnahmeöffnung 20 in einem Teil des Mittelstegs 5 zur Aufnahme des in Figur 1 dargestellten Drehbolzens 10 vorgesehen.

Damit insbesondere ein formschlüssiger Eingriff mit gleichzeitig hoher Zugbelastung und gesteigerte Belastungsfähigkeit zwischen Zapfen 14 und Seitenaufnahmenut 15 erfolgen kann, weisen diese in Querrichtung Q einen gekrümmten Verlauf 30 auf.

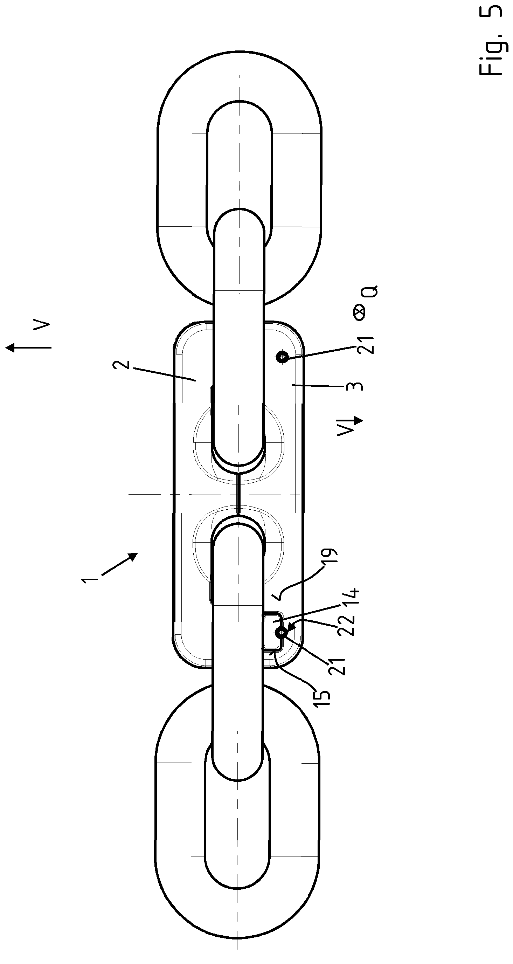

Figur 5 zeigt eine Seitenansicht auf das erfindungsgemäße Blockschloss 1, bei der insbesondere noch einmal ersichtlich wird, dass der auf die Bildebene bezogene linke Zapfen 14 in eine Seitenaufnahmenut 15 eingedreht ist. Nicht dargestellt ist das Eingreifen eines auf die Bildebene bezogen hinter dem Blockschloss eingreifenden Zapfens, welcher in die hinter der Bildebene liegenden Seitenfläche in die untere Blockschlosshälfte 3 eingedreht ist. Damit das Blockschloss 1 im verriegelten Zustand verbleibt, sind zwei Sicherungsbolzen 21 eingesetzt, wobei die Sicherungsbolzen 21 in Querrichtung Q zu dem Blockschloss 1 in dieses eingesetzt sind, wobei eine Sicherungsbolzenaufnahme 22 bezogen auf den in Figur 1 dargestellten Längsschnitt jeweils ca. hälftig im Bereich des Zapfens 14 und hälftig im Bereich der Seitenaufnahmenut 15 ausgebildet ist.

Ferner gut ersichtlich in der Darstellung gemäß Figur 3b) und c) ist, dass der Zapfen 14 an seinem Zapfenende 23 eine Verbreiterung 24 aufweist, welche gemäß Figur 3a) bevorzugt ebenfalls einen gekrümmten Verlauf 30 besitzt, wobei die Verbreiterung 24 korrespondierend in eine Hinterschneidung 25 gemäß Figur 4a) und 4c) der Seitenaufnahmenut 15 formschlüssig zum Eingriff kommt. Hierdurch wird insbesondere ein Abscheren gemäß Figur 5 in Vertikalrichtung V der beiden Blockschlosshälften 2, 3 zueinander vermieden. Insbesondere in Figur 4c) ist noch einmal dargestellt, dass die sich ergebenden Aufnahmeöffnungen 4 durch einen jeweiligen Stegansatz 26 mit einer Anlagefläche 27, an der die Innenseite der Rundung 6 des jeweils aufgenommenen Kettengliedes 7 zur Anlage kommt, ausgebildet ist, wobei der Stegansatz 26 dann, insbesondere dargestellt in Figur 4a), eine Rückenfläche 28 aufweist, die formschlüssig in Längsrichtung von einer Stützfläche 29 der oberen Blockschlosshälfte 2 hintergriffen wird.

Zum Ver- bzw. Entriegeln werden die in Figur 2 dargestellten jeweils im Eingriff befindlichen Kettenglieder 7 derart gegenüber dem Blockschloss 1 verschwenkt, dass die Drehbewegung D um die Drehachse 11 ausgeführt werden kann, sodann die Kettenglieder 7 entnommen werden oder aber die Blockschlosshälften 2, 3 in Vertikalrichtung V auseinander gezogen werden.

### Bezugszeichen:

1 - Blockschloss
2 - obere Blockschlosshälfte
3 - untere Blockschlosshälfte
4 - Aufnahmeöffnung
5 - Mittelsteg
6 - Rundung zu 7
7 - Kettenglied
8 - Kette
9 - Mittellängsebene
10 - Drehbolzen
11 - Drehachse
12 - Längsrichtung zu 1
13 - Ende zu 2
14 - Zapfen
15- Seitenaufnahmenut
16- Ende zu 3
17- Schenkel zu 7
18 - Öffnung zu 15
19- Seitenfläche zu 3
20 - Aufnahmeöffnung
21 - Sicherungsbolzen
22 - Sicherungsbolzenaufnahme
23 - Zapfenende
24 - Verbreiterung
25 - Hinterschneidung
26 - Stegansatz
27 - Anlagefläche
28 - Rückenfläche
29 - Stützfläche
30- gekrümmter Verlauf
Z - Zugrichtung
D - Drehbewegung
Q - Querrichtung
V - Vertikalrichtung

## Patentansprüche

1. Blockschloss (1) zur Verbindung zweier Kettenenden, wobei das Blockschloss (1) zwei gegenüberliegende sich in Längsrichtung erstreckende Blockschlosshälften (2, 3) aufweist, welche über Zapfen (14) und Nuten formschlüssig ineinandergreifen und unter Ausbildung zweier Aufnahmeöffnungen (4, 20) zur Aufnahme je eines Kettengliedes (7) verriegeln, wobei die Aufnahmeöffnungen (4,) durch einen sich von einer Blockschlosshälfte (2) zu der gegenüberliegenden Blockschlosshälfte (3) erstreckenden zweigeteilten Mittelsteg (5) voneinander getrennt sind, **dadurch gekennzeichnet, dass** die Blockschlosshälften (2, 3) drehbar über den Mittelsteg (5) gekoppelt sind und an den Enden (13) einer Blockschlosshälfte (2) jeweils ein in Richtung der gegenüberliegenden Blockschlosshälfte (3) überstehender Zapfen (14) ausgebildet ist, der bei Ausführen einer relativen Drehbewegung (D) beider Blockschlosshälften (2, 3) zueinander seitlich in eine an dem jeweiligen Ende (16) der gegenüberliegenden Blockschlosshälfte (3) ausgebildete Seitenaufnahmenut (15) eingreift, wobei die je eine Seitenaufnahmenut (15) eine in einer Seitenfläche (19) liegende Öffnung (18) zum Einschwenken des Zapfens (14) aufweist und die Öffnungen (18) an gegenüberliegenden Seitenflächen (19) der Blockschlosshälfte (3) ausgebildet sind.

2. Blockschloss nach Anspruch 1, **dadurch gekennzeichnet, dass** die Blockschlosshälften (2, 3) über einen Drehbolzen (10) in dem Mittelsteg (5) lösbar miteinander gekoppelt sind.

3. Blockschloss nach Anspruch 1 oder 2, **dadurch gekennzeichnet, dass** die Blockschlosshälften (2, 3) um eine Orthogonale zur Längsrichtung (12) des Blockschlosses (1) drehbar gelagert sind.

4. Blockschloss nach einem der Ansprüche 1 bis 3, **dadurch gekennzeichnet, dass** der Zapfen (14) an seinem Zapfenende (23) eine Verbreiterung (24) aufweist, wobei die Seitenaufnahmenut (15) eine Hinterschneidung (25) zur Aufnahme der Verbreiterung (24) aufweist.

5. Blockschloss nach einem der Ansprüche 1 bis 4, **dadurch gekennzeichnet, dass** die zwei Blockschlosshälften (2, 3) im verriegelten Zustand durch mindestens einen Sicherungsbolzen (21) miteinander verriegelt sind.

6. Blochschloss nach Anspruch 5, **dadurch gekennzeichnet, dass** der Sicherungsbolzen (21) ein Federstift ist.

7. Blockschloss nach einem der Ansprüche 5 oder 6, **dadurch gekennzeichnet, dass** der Sicherungsbolzen (21) orthogonal zu der Längsrichtung des Blockschlosses (1) eingesetzt ist.

8. Blockschloss nach Anspruch 7, **dadurch gekennzeichnet, dass** der Sicherungsbolzen (21) in eine Sicherungsbolzenaufnahme (22) über die Seitenfläche oder über eine Oberseite und/oder Unterseite des Blockschlosses (1) eingesetzt wird.

9. Blockschloss nach Anspruch 8, **dadurch gekennzeichnet, dass** die Sicherungsbolzenaufnahme (22) jeweils zur Hälfte in einer Blockschlosshälfte (2, 3) ausgebildet ist.

10. Blockschloss nach einem der Ansprüche 8 oder 9, **dadurch gekennzeichnet, dass** die Sicherungsbolzenaufnahme (22) in dem Zapfen (14) und der korrespondierenden Seitenaufnahmenut (15) angeordnet ist.

11. Blockschloss nach einem der vorhergehenden Ansprüche, **dadurch gekennzeichnet, dass** die Zapfen (14) und die Seitenaufnahmenuten (15) in Querrichtung (Q) einen gekrümmten Verlauf (30) aufweisen.

## Claims

1. Block lock (1) for connecting two chain ends, wherein the block lock (1) has two opposite block lock halves (2, 3) extending in the longitudinal direction which engage in an interlocking manner by means of pins (14) and grooves and lock together forming two mounting openings (4, 20) for receiving a chain link (7) at each end, wherein the mounting openings (4) are separated from one another by a two-part crossbar (5) extending from one block lock half (2) to the opposite block lock half (3), **characterised in that** the block lock halves (2, 3) are coupled rotatably via the crossbar (5) and a pin (14) projecting in the direction of the opposite block lock half (3) is formed at the ends (13) of a block lock half (2), which pin engages laterally in a lateral mounting groove (15) formed on the respective end (16) of the opposite block lock half (3) during a rotary movement (D) of both block lock halves (2, 3) relative to each other, wherein each lateral mounting groove (15) has an opening (18) in a side surface (19) for swivelling the pin (14) and the openings (18) are formed on opposite side surfaces (19) of the block lock half (3).

2. Block lock according to claim 1, **characterised in that** the block lock halves (2, 3) are detachably coupled to each other at the crossbar (5) by means of a pivot bolt (10).

3. Block lock according to claim 1 or 2, **characterised in that** the block lock halves (2, 3) are mounted rotatably about an orthogonal to the longitudinal direction (12) of the block lock (1).

4. Block lock according to any of claims 1 to 3, **characterised in that** at its pin end (23) the pin (14) has a widening (24), wherein the lateral mounting groove (15) has an undercut (25) for receiving the widening (24).

5. Block lock according to any of claims 1 to 4, **characterised in that** in the locked state the two block lock halves (2, 3) are locked together by at least one securing bolt (21).

6. Block lock according to claim 5, **characterised in that** the securing bolt (21) is a spring pin.

7. Block lock according to any of claims 5 or 6, **characterised in that** the securing bolt (21) is inserted orthogonally relative to the longitudinal direction of the block lock (1).

8. Block lock according to claim 7, **characterised in that** the securing bolt (21) is inserted into a securing bolt recess (22) via the side surface or a top surface and/or a bottom surface of the block lock (1).

9. Block lock according to claim 8, **characterised in that** the securing bolt recess (22) is half-formed in each block lock half (2, 3).

10. Block lock according to any of claims 8 or 9, **characterised in that** the securing bolt recess (22) is arranged in the pin (14) and in the corresponding lateral mounting groove (15).

11. Block lock according to any of the preceding claims, **characterised in that** the pins (14) and the lateral mounting grooves (15) have a curved configuration (30) in transverse direction (Q).

## Revendications

1. Bloc serrure (1) pour relier deux extrémités de chaîne, dans lequel bloc serrure (1) présente deux moitiés de bloc serrure opposées (2, 3) s'étendant dans la direction longitudinale, lesquelles s'engagent l'une dans l'autre avec adaptation de formes via des tourillons (14) et des rainures et se verrouillent en formant deux ouvertures réceptrices (4, 20) pour recevoir respectivement un maillon de chaîne (7), dans lequel les ouvertures réceptrices (4) sont séparées l'une de l'autre par une barrette centrale (5) divisée en deux et s'étendant d'une moitié de bloc serrure (2) à la moitié de bloc serrure opposée (3), **caractérisé en ce que** les moitiés de bloc serrure (2, 3) sont couplées à rotation via la barrette centrale (5) et, aux extrémités (13) d'une moitié de bloc serrure (2) est formé respectivement un tourillon (14) saillant dans la direction de la moitié de bloc serrure opposée (3), laquelle cheville s'engage, lorsqu'il s'effectue un mouvement rotatif relatif (D) des deux moitiés de bloc serrure (2, 3) l'une par rapport à l'autre, latéralement dans une rainure latérale réceptrice (15) formée à l'extrémité respective (16) de la moitié de bloc serrure opposée (3), dans lequel la respectivement une rainure latérale réceptrice (15) présente une ouverture (18) ménagée dans une surface latérale (19) pour introduire par pivotement le tourillon (14) et les ouvertures (18) sont formées sur des surfaces latérales opposées (19) de la moitié de bloc serrure (3).

2. Bloc serrure selon la revendication 1, **caractérisé en ce que** les moitiés de bloc serrure (2, 3) sont couplées l'une à l'autre de manière amovible via un pivot (10) dans la barrette centrale (5).

3. Bloc serrure selon la revendication 1 ou 2, **caractérisé en ce que** les moitiés de bloc serrure (2, 3) sont montées à rotation autour d'une orthogonale à la direction longitudinale (12) du bloc serrure (1).

4. Bloc serrure selon l'une quelconque des revendications 1 à 3, **caractérisé en ce que** le tourillon (14) présente à son extrémité (23) un évasement (24), dans lequel la rainure latérale réceptrice (15) présente une dépouille (25) pour la réception de l'évasement (24).

5. Bloc serrure selon l'une quelconque des revendications 1 à 4, **caractérisé en ce que** les deux moitiés de bloc serrure (2, 3) sont verrouillées l'une avec l'autre à l'état verrouillé par au moins un boulon de sécurité (21).

6. Bloc serrure selon la revendication 5, **caractérisé en ce que** le boulon de sécurité (21) est une tige à ressort.

7. Bloc serrure selon l'une quelconque des revendications 5 ou 6, **caractérisé en ce que** le boulon de sécurité (21) est inséré orthogonalement à la direction longitudinale du bloc serrure (1).

8. Bloc serrure selon la revendication 7, **caractérisé en ce que** le boulon de sécurité (21) est inséré dans un logement de boulon de sécurité (22) sur la surface latérale ou sur une face supérieure et/ou une face inférieure du bloc serrure (1).

9. Bloc serrure selon la revendication 8, **caractérisé en ce que** le logement de boulon de sécurité (22) est formé respectivement pour moitié dans une moitié de bloc serrure (2, 3).

10. Bloc serrure selon l'une quelconque des revendications 8 ou 9, **caractérisé en ce que** le logement de boulon de sécurité (22) est agencé dans le tourillon (14) et la rainure latérale réceptrice correspondante (15).

11. Bloc serrure selon l'une quelconque des revendications précédentes, **caractérisé en ce que** les tourillons (14) et les rainures latérales réceptrices (15) présentent dans la direction transversale (Q) un tracé arqué (30).
